# EUROPEAN PATENT SPECIFICATION

(11) **EP 0 937 924 B1**
(45) Date of publication and mention of the grant of the patent: **13.08.2003**
(21) Application number: 99101513.2
(22) Date of filing: 28.01.1999
(51) Int. Cl.: F16J 15/08

(54) **Metal gasket with main and auxiliary beads**
Metall-Flachdichtung mit Haupt- und Hilfsdichtwulst
Joint métallique comportant des nervures principales et auxiliaires

(30) Priority: 19.02.1998 JP 5448198
(43) Date of publication of application: 25.08.1999
(73) Proprietor: ISHIKAWA GASKET CO. LTD., Tokyo (JP)
(72) Inventor: Udagawa, Tsunekazu, Ichikawa-shi, Chiba-ken (JP)
(74) Representative: Weisert, Annekäte, Dipl.-Ing. Dr.-Ing.

(56) References cited:
- DE-C- 893 598
- FR-A- 810 728
- JP-A- 58 149 468
- US-A- 5 664 790
- PATENT ABSTRACTS OF JAPAN vol. 007, no. 271 (M-260), 3 December 1983 (1983-12-03) & JP 58 149468 A (NIHON METARU GASUKETSUTO KK), 5 September 1983 (1983-09-05)

## Description

### Background of the Invention and Related Art Statement

The present invention relates to a metal gasket with main and auxiliary beads, more particularly, to a metal gasket with auxiliary beads arranged to sandwich a main bead, which is suitable to an internal combustion engine.

In a gasket used for an internal combustion engine, such as a cylinder head gasket and manifold gasket, a bead is often formed on a metal plate around a hole to be sealed. When the gasket is compressed, the bead provides a surface pressure thereat to securely seal around the hole.

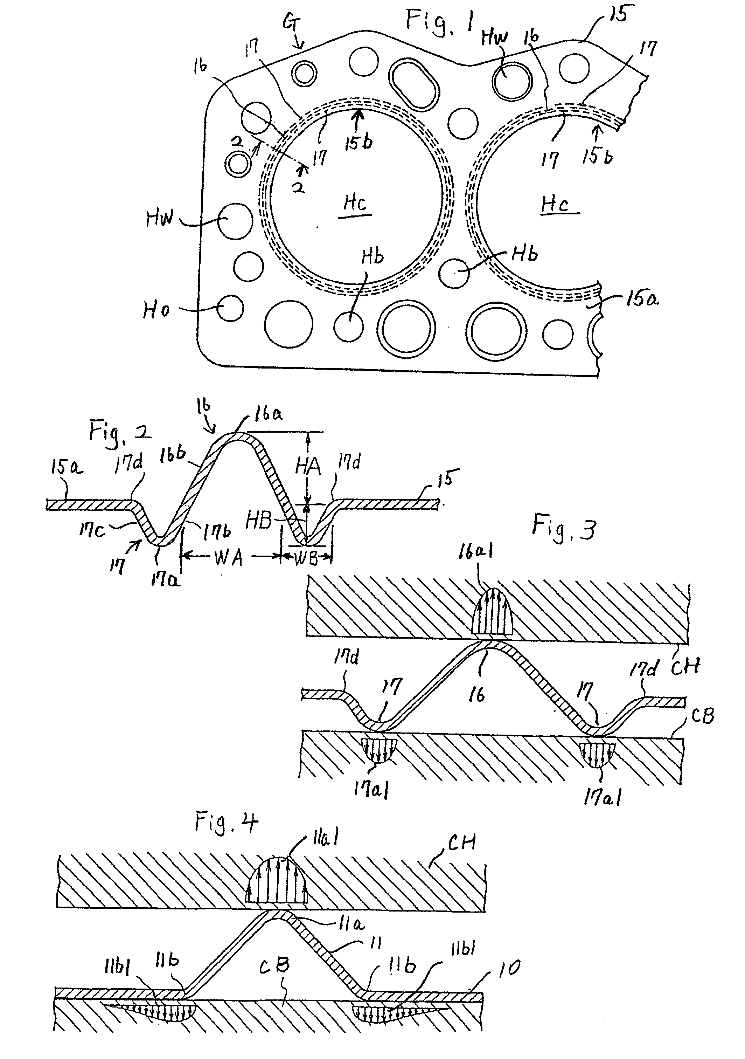

A conventional metal plate 10 with a bead 11 is shown in Fig. 4, wherein the bead 11 projects outwardly from the metal plate 10. When the metal plate 10 is situated between a cylinder head CH and a cylinder block CB and is tightened, surface pressures are formed on the bead 11.

In particular, a head portion 11a of the bead 11 provides a high surface pressure 11a1 directing the cylinder head CH, while each edge portion 11b provides a relatively small surface pressure 11b1 directing the cylinder block CB. The surface pressure 11a1 spreads over the entire head portion 11a. However, the surface pressure 11b1 spreads from the edge portion 11b to an outer portion away from the bead 11 while gradually reducing the surface pressure from the edge portion 11b.

Therefore, in the edge portion 11b, a relatively small surface pressure is spread over the large area of the cylinder block, so that a proper surface pressure may not be obtained at the edge portion 11b. As a result, the bead may not properly provide the surface pressures on both engine parts, i.e. cylinder head and cylinder block.

In the metal gasket, therefore, the bead may be combined with other sealing mechanism, such as another bead directing in the opposite direction, a wire ring, shim or solid portion for providing a solid, i.e. non-resilient, surface pressure, and so on.

In U.S. Patent No. 5,221,097, a bead is combined with a groove formed in an engine part such that the bead is located in the groove. Two beads directing in the opposite directions may be disposed in the two grooves in the engine parts.

In German Patent No. 893,598, two beads extending downwardly are disposed to sandwich one bead extending upwardly. However, the beads are not arranged to balance the surface pressures on a metal plate. Also US-A-5,664,790 describes two beads, as in the preamble of claim 1.

The gasket combining the bead and other sealing mechanism can properly seal around a hole to be sealed. However, it is desirable to securely seal around a hole with a simple mechanism.

In view of the above, the present invention has been made, and an object of the invention is to provide a metal gasket with main and auxiliary beads, which can securely seal around a hole.

Another object of the invention is to provide the metal gasket with the main and auxiliary beads as stated above, wherein the beads can provide sufficiently large surface pressures at limited areas without spreading over large areas.

A further object of the invention is to provide the metal gasket with the main and auxiliary beads as stated above, wherein the surface pressures of the beads can be controlled as desired.

A still further object of the invention is to provide the metal gasket with the main an auxiliary beads as stated above, which is suitable for a single metal plate gasket.

Further objects and advantages of the invention will be apparent from the following description of the invention.

### Summary of the Invention

A metal gasket of the invention is basically formed of one metal plate having a base portion extending substantially throughout an entire area of the gasket, and a hole in the metal plate. A main bead is formed in the metal plate to surround the hole. The main bead includes a first head portion located above the base portion and two first side portions extending obliquely outwardly, i.e. downwardly, from the first head portion.

In the invention, two auxiliary beads are further formed in the metal plate to sandwich the main bead therebetween. Each auxiliary bead includes a second head portion located below the base portion and two second side portions extending obliquely outwardly, i.e. upwardly, from the second head portion. One of the two second side portions close to the main bead in each auxiliary bead extends substantially linearly to one of the two first side portions of the main bead, while the other of the two second side portions away from the main bead in each auxiliary bead extends to the base portion of the metal plate. Each auxiliary bead has a height less than a height of the main bead to properly provide surface pressures on the engine parts where the main and auxiliary beads contact.

In the present invention, two auxiliary beads sandwich the main bead and extend in the direction opposite to the main bead relative to the base portion of the metal plate. Therefore, when the gasket is tightened, the first head and the second heads of the main and auxiliary beads are compressed to provide independent surface pressures concentrically without spreading to the adjacent areas. The hole can be sealed by high surface pressures formed by the main and auxiliary beads.

In the gasket of the invention, since the height of the auxiliary bead is less than the height of the main bead, the surface pressure formed by the auxiliary bead is less than that of the main bead. However, since two auxiliary beads are formed at a side opposite to the main bead, the engine parts where the main and auxiliary beads contact can be securely and properly sealed.

Preferably, the width of each of the auxiliary beads is less than the width of the main bead. Also, preferably, the main and auxiliary beads are arranged symmetrically to a line perpendicular to the plane of the base portion and passing through a center of the first head portion of the main bead. Accordingly, the surface pressures are directed perpendicularly to the surfaces of the engine parts to thereby securely seal thereat.

In the invention, when the heights and the widths of the main and auxiliary beads are adjusted, the surface pressure formed at the first head portion and the surface pressures formed at the second head portions are regulated. Thus, the distribution of the surface pressures applied to the engine parts can be regulated, as desired.

### Brief Description of the Drawings

Fig. 1 is a partial plan view of a metal gasket of the invention;
Fig. 2 is an enlarged sectional view taken along line 2-2 in Fig. 1;
Fig. 3 is an explanatory sectional view, similar to Fig. 2, for showing a condition that the gasket is installed and compressed in an engine; and
Fig. 4 is an explanatory sectional view, similar to Fig. 3, for showing a condition that a conventional gasket is installed and compressed in an engine.

### Detailed Description of a Preferred Embodiment

Now, the present invention will be explained with reference to the drawings.

A gasket G as shown in the drawings is a cylinder head gasket to be installed between a cylinder head CH and a cylinder block CB. The gasket G includes a plurality of cylinder bores Hc, water holes Hw, oil holes Ho, bolt holes Hb and so on, as in the conventional gasket.

The sealing mechanisms of the invention are formed around the cylinder bores Hc. Therefore, only the sealing mechanisms around the cylinder bore Hc are explained herein. In order to seal holes other than the cylinder bores Hc, any other sealing mechanisms may be used.

The gasket G is formed of one metal plate 15 including a base portion 15a extending substantially throughout an entire area of the gasket, and a sealing portion 15b around the cylinder bores Hc. Preferably, the metal plate 15 is a stainless steel plate with good spring characteristic.

As shown in Fig. 2, the sealing portion 15b is formed of a main bead 16 and two auxiliary beads 17 situated on both sides of the main bead 16 to sandwich the main bead 16. The main bead 16 projects upwardly from the base portion 15a, and the auxiliary beads 17 project downwardly from the base portion 15a.

The main bead 16 has a head portion 16a and two side walls 16b, while the auxiliary bead 17 includes a head portion 17a and side walls 17b, 17c. The side wall 16b of the main bead 16 extends to the side wall 17b of the auxiliary bead 17 linearly. The side wall 17c extends to the base portion 15a through an edge 17d. Incidentally, the main bead 16 is a portion above a center line passing through a center of the base portion 15a, and the auxiliary beads 17 are located below the center line.

The height HA of the main bead 16 is greater than the height HB of the auxiliary bead 17. Also, the width WA of the main bead 16 is greater than the width WB of the auxiliary bead 17. Thus, when the gasket G is compressed, the main bead 16 provides a surface pressure greater than that of the auxiliary bead 17.

The main bead 16 and the auxiliary beads 17 are arranged symmetrically on the metal plate 15 relative to a line perpendicularly to the center line of the base portion 15a and passing through a middle of the head portion 16a of the main bead. Thus, when the gasket is compressed, the surface pressures of the auxiliary beads 17 are the same. Also, all the surface pressures formed on the main and auxiliary beads are oriented in the vertical directions.

When the gasket G is situated between the cylinder head CH and the cylinder block CB and is tightened, the beads 16, 17 are compressed to provide the surface pressures at the head portions 16a, 17a. As shown in Fig. 3, the surface pressure 16a1 formed at the head portion 16a of the main bead 16 is greater than the surface pressure formed at the head portion 17a of the auxiliary bead 17.

In the invention, since the head portions 16a, 17a directly contact the cylinder head CH and cylinder block CB, the surface pressures 16a1, 17a1 are concentrated at the respective head portions 16a, 17a of the beads. Since the surface pressures formed at the head portions are not spread over the wide areas of the plate 15, the gasket G can securely seal between the cylinder head CH and the cylinder block CB by the surface pressures formed on the head portions 16a, 17a.

In the invention, the heights and widths of the main and auxiliary beads 16, 17 are adjusted to provide optimum surface pressures to the cylinder head and the cylinder block. The proportion of the surface pressures applied to the cylinder head and the cylinder block can be adjusted easily in view of the characteristics, such as strength and rigidity, of the cylinder head and the cylinder block.

In the invention, since the surface pressures are formed vertically relative to the cylinder head and the cylinder block, the gasket can be well fitted between the cylinder head and the cylinder block.

In the embodiment, the gasket is formed of one metal plate. However, the metal plate with the main and auxiliary beads may be combined with one or more metal plates to constitute a metal laminate gasket. In this case, the main and auxiliary beads can securely seal around a hole to be sealed, as well.

In the invention, the metal plate for constituting the gasket includes the main bead and two auxiliary beads projecting outwardly from the base portion of the metal plate. Therefore, when the gasket is compressed, the main and auxiliary beads provide the surface pressures, which are concentrated at the head portions of the beads. The sealing can be made securely and positively.

## Claims

1. A metal gasket (G) comprising:
a metal plate (15) having a base portion (15a) extending substantially throughout an entire area of the gasket, and a sealing portion (15b)
surrounding a hole (Hc) formed in the metal plate,
a main bead (16) formed in the plate to surround the hole (Hc) and having a first head portion (16a) located above the base portion, and
two auxiliary beads (17) formed in the plate to sandwich the main bead (16) therebetween and having a second head portion (17a) located below the base portion,
said metal gasket (G) being **characterized in that** each auxiliary bead (17) has a height (HB) below the base portion less than a height (HA) of the main bead (16) above the base portion to provide balanced surface pressures on portions where the main and auxiliary beads contact.

2. A metal gasket (G) according to claim 1, wherein a maximum width (WB) of each of the auxiliary beads is less than a maximum width (WA) of the main bead.

3. A metal gasket (G) according to claim 1, wherein the main and auxiliary beads are arranged symmetrically to a line perpendicular to a plane of the base portion (15a) and passing through a center of the first head portion (16a) of the main bead.

4. A metal gasket (G) according to claim 3, wherein the surface pressures are formed substantially at the first and second head portions (16a, 17a) when the gasket is compressed.

5. A metal gasket (G) according to claim 4, wherein the surface pressure (16a1) formed at the first head portion and the surface pressures (17a1) formed at the second head portions are regulated by adjusting the heights and widths of the main and auxiliary beads.

## Patentansprüche

1. Metalldichtung (G), umfassend:
eine Metallplatte (15) mit einem Basisabschnitt (15a), welcher sich im Wesentlichen über einen gesamten Bereich der Dichtung und über einen Abdichtungsbereich, welcher ein in der Metallplatte ausgebildetes erstes Loch (Hc) umgibt, erstreckt,
einen Hauptwulst (16), welcher in der Platte ausgebildet ist, um das Loch (Hc) zu umgeben, und einen über dem Basisabschnitt befindlichen ersten Kopfabschnitt (16a) besitzt, und
zwei Hilfswülste (17), welche in der Platte ausgebildet sind, so dass dazwischen der Hauptwulst (16) angeordnet ist, und
einen unter dem Basisabschnitt befindlichen zweiten Kopfabschnitt (17a) besitzen,
wobei die Metalldichtung (G) **dadurch gekennzeichnet ist, dass** jeder Hilfswulst (17) eine Höhe (HB) unter dem Basisabschnitt besitzt, welche kleiner als eine Höhe (HA) des Hauptwulstes (16) über dem Basisabschnitt ist, um für ausgeglichene Oberflächendrücke auf Abschnitten zu sorgen, wo sich die Hauptund Hilfswülste berühren.

2. Metalldichtung (G) nach Anspruch 1, wobei eine maximale Breite (WB) jedes Hilfswulstes kleiner ist als eine maximale Breite (WA) des Hauptwulstes.

3. Metalldichtung (G) nach Anspruch 1, wobei die Haupt- und Hilfswülste symmetrisch zu einer Linie angeordnet sind, welche senkrecht zu einer Ebene des Basisabschnittes (15a) ist und welche durch eine Mitte des ersten Kopfabschnittes (16a) des Hauptwulstes verläuft.

4. Metalldichtung (G) nach Anspruch 3, wobei die Oberflächendrücke im Wesentlichen an den ersten und zweiten Kopfabschnitten (16a, 17a) gebildet werden, wenn die Dichtung zusammengedrückt wird.

5. Metalldichtung (G) nach Anspruch 4, wobei der an dem ersten Kopfabschnitt gebildete Oberflächendruck (16a1) und die an den zweiten Kopfabschnitten gebildeten Oberflächendrücke (17a1) dadurch eingestellt werden, dass die Höhen und Breiten der Haupt- und Hilfswülste eingestellt werden.

## Revendications

1. Joint métallique (G), comprenant :
une plaque métallique (15) ayant une partie de base (15a) s'étendant sensiblement sur la totalité d'une superficie du joint et une partie d'étanchement (15b) entourant un trou (Hc) formé dans la plaque métallique,
un bourrelet principal (16) formé dans la plaque de façon à entourer le trou (Hc) et ayant une première partie de tête (16a) située au-dessus de la partie de base, et
deux bourrelets auxiliaires (17) formés dans la plaque de manière à prendre en sandwich le bourrelet principal (16) entre eux et ayant une seconde partie de tête (17a) située au-dessous de la partie de base,
ledit joint métallique (G) étant **caractérisé en ce que** chaque bourrelet auxiliaire (17) a une hauteur (HB) au-dessous de la partie de base qui est inférieure à une hauteur (HA) du bourrelet principal (16) au-dessus de la partie de base pour engendrer des pressions de surface équilibrées sur des parties au niveau desquelles le bourrelet principal et les bourrelets auxiliaires sont en contact.

2. Joint métallique (G) selon la revendication 1, dans lequel une largeur maximum (WB) de chacun des bourrelets auxiliaires est inférieure à une largeur maximum (WA) du bourrelet principal.

3. Joint métallique (G) selon la revendication 1, dans lequel le bourrelet principal et les bourrelets auxiliaires sont agencés symétriquement à une ligne perpendiculaire à un plan de la partie de base (15a) et traversant un centre de la première partie de tête (16a) du bourrelet principal.

4. Joint métallique (G) selon la revendication 3, dans lequel les pressions de surface se forment sensiblement au niveau de la première et de la seconde partie de tête (16a, 17a) quand le joint est comprimé.

5. Joint métallique (G) selon la revendication 4, dans lequel la pression de surface (16a1) formée au niveau de la première partie de tête et les pressions de surface (17a1) formées au niveau des secondes parties de tête sont régulées en ajustant les hauteurs et les largeurs du bourrelet principal et des bourrelets auxiliaires.
